Europäisches Patentamt

European Patent Office

Office européen des brevets

(19)

(11) Veröffentlichungsnummer: **0 333 637**
**A2**

(12) # EUROPÄISCHE PATENTANMELDUNG

(21) Anmeldenummer: **89730070.3**

(22) Anmeldetag: **15.03.89**

(51) Int. Cl.⁴: **G 02 B 7/04**

(30) Priorität: **16.03.88 AT 705/88**

(43) Veröffentlichungstag der Anmeldung:
**20.09.89 Patentblatt 89/38**

(84) Benannte Vertragsstaaten:
**AT CH DE FR GB IT LI**

(71) Anmelder: **ARNOLD & RICHTER CINE TECHNIK GMBH & CO. BETRIEBS KG.**
**Türkenstrasse 89**
**D-8000 München 40 (DE)**

**ARRI CINE & VIDEO GERÄTE GESELLSCHAFT M.B.H.**
**Mariahilfer Strasse 136**
**A-1150 Wien (AT)**

(72) Erfinder: **Hohenecker, Harald**
**Wilhelmstrasse 47/7**
**A-1120 Wien (AT)**

(74) Vertreter: **Ninnemann, Detlef, Dipl.-Ing. Patentanwalt**
**Delbrückstrasse 8**
**D-2800 Bremen 1 (DE)**

(54) **Makroobjektiv mit einem am Objektivgehäuse drehbar gelagerten Entfernungsring.**

(57) Bei einem Makroobjektiv mit einem am Objektivgehäuse drehbar gelagerten Entfernungsring und einer durch diesen entlang der Objektivachse längsverschiebbaren Linsengruppe und einem Blendenantrieb, wird zur automatischen und stufenlosen Blendeneinstellung entsprechend der Entfernungseinstellung vorgeschlagen, daß der auf der längsverschiebbaren Linsengruppe (3) gelagerte Blendenantrieb (4) über einen Blendenantriebsstift (5) mit einer am Objektivgehäuse (9) gelagerten, z.B. durch einen im Winkel zur Objektivachse (14) verlaufenden Führungsschlitz (21) gebildeten Umsetzvorrichtung (30) zur Umsetzung der Längsbewegung der Linsengruppe (3) in eine Drehbewegung des Blendenantriebsstiftes (5) verbunden ist.

Fig.1

EP 0 333 637 A2

**Beschreibung**

## Makroobjektiv mit einem am Objektivgehäuse drehbar gelagerten Entfernungsring

Die Erfindung betrifft ein Makroobjektiv mit einem am Objektivgehäuse drehbar gelagerten Entfernungsring und einer durch diesen entlang der Objektivachse längsverschiebbaren Linsengruppe und einem Blendenantrieb.

Bei derartigen bekannten Makroobjektiven muß in nachteiliger Weise anhand von Tabellen in Abhängigkeir vom Abbil dungsmaßstab der Blendenring manuell betätigt werden. Bei manchen Objektiven ist diese Tabelle der Verlängerungsfaktoren direkt am Objektivtubus eingraviert. Eine derartige manuelle Einstellung der Blende hat den besonderen Nachteil, daß insbesondere bei laufender Kamera eine rasche Einstellung der Entfernung mit einer entprechenden korrekten Blendeneinstellung praktisch unmöglich ist. Abgesehen davon, sind bei derartigen Tabellen nur ein paar Werte wirklich exakt einzustellen, während die dazwischen liegenden Werte mehr oder minder geschätzt werden müssen.

Der Erfindung liegt die Schaffung eines Makroobjektives der eingangs beschriebenen Art zugrunde, mit dem die Blendenwerte entprechend der Entfernungseinstellung durch den Entfernungsring automatisch einstellbar sind.

Diese Aufgabe wird erfindungsgemäß dadurch gelöst, daß der Blendenantrieb über einen Blendenantriebsstift mit einer Umsetzeinrichtung zur Umsetzung der Längsbewegung der Linsengruppe in eine Drehbewegung des Blendenantriebsstiftes verbunden ist.

Durch diese konstruktiv sehr einfache Ausführung sind in einem vollautomatischen und stufenlosen Vorgang die richtigen Belichtungswerte bei jeder beliebigen Entfernungseinstellung absolut zuverlässig gewährleistet. Dies hat nun den besonderen Vorteil zufolge, daß nunmehr auch bei Makroobjektiven bei laufender Kamera eine rasche Entfernungsverstellung mit richtigen Belichtungswerten durchführbar ist.

In einer vorteilhaften Ausgestaltung der erfindungsgemäßen Lösung weist die Umsetzeinrichtung einen in einem Winkel zur Objektivachse verlaufenden Führungsschlitz und einen in diesen eingreifenden Stift zur Umsetzung der Längsbewegung der Linsengruppe in eine Drehbewegung des Blendenantriebsstiftes auf.

Die Umsetzvorrichtung ist so ausgebildet, daß bei einer Längsverschiebung der Linsengruppe um Y mm der Blendenantriebsstift und damit der Blendenring um der Entfernungsänderung entsprechende Setblendenstufen verschoben wird. Bei dieser Umsetzung muß es sich nicht unbedingt um eine lineare Gesetzmäßigkeit handeln, so daß der Führungsschlitz nicht unbedingt eine Gerade sein muß.

Eine weitere vorteilhafte Ausbildungsvariante der Erfindung besteht darin, daß die Umsetzvorrichtung durch eine drehbar zwischen der Linsengruppe und einem Objektivtubus gelagerte und mit dem Blendenantriebsstift verbundene Blendenhülse gebildet ist, die in ihrem dem Blendenantriebsstift gegenüberliegenden Endbereich einen Führungsstift aufweist, der in einen drehfest an der Gehäuseinnenseite angeordneten Führungsschlitz eingesteckt ist.

Eine derartige konstruktrive Ausführung ist besonders deshalb von Vorteil, da die Umsetzvorrichtung aus dem räumlich sehr beengten Bereich des Blendenantriebes und der im Objektivtubus befindlichen Linsengruppe in den freien Bereich zwischen Objektivkapsel und dem Objektiv verlagert ist.

Eine weitere besonders bevorzugte Ausbildungsform der Erfindung ist dadurch gekennzeichnet, daß ein Blendenring mit einer koaxial zur Objektivachse drehbar gelagerten Blendenhülse drehverbunden ist, die den im Winkel zur Objektivachse verlaufenden Führungs- bzw. Längsschlitz aufweist. Mit einer derartigen technischen Lösung ist sowohl eine automatische Blendenverstellung durch die Umsetzvorrichtung als auch nach wie vor eine manuelle Einstellung der Blende durch den Blendenring möglich.

Die Blendenhülse ist entsprechend einer weiteren Ausbildungsvariante der Erfindung in radialer Richtung koaxial innerhalb der Korrekturhülse angeordnet und weist in deren Bereich eine konusförmige Erweiterung auf. Durch diese konusförmige Erweiterung der Blendenhülse wird der Lichteinfall auf die Linsengruppe in keiner Weise beeinträchtigt. Gemäß einer weiteren vorteilhaften Variante der Erfindung ist im stirnseitgen Endbereich der Korrekturhüle und dem Objektivgehäuse eine Wellenfeder angeordnet.

Durch eine derartige Ausbildung ist sichergestellt, daß bei einer Längsverschiebung der Linsengruppe und der zwangsläufig damit verbundenen Längsverschiebung der Blendenhülse die durch den Längsschlitz in der Korrekturhülse und den Führungsstift auf der Blendenhülse gebildete Umsetzvorrichtung eine Verdrehung der Blendenhülse mitsamt dem Blenden-antriebsstift und keine Verdrehung der Korrekturhülse bewirkt. Für die manuelle Einstellung der Blendenwerte durch den Blendenring ist die durch die Wellenfeder bewirkte erhöhte Reibung einfach überwindbar. Entsprechend einer weiteren vorteilhaften Ausbildung der Erfindung ist die Umsetzvorrichtung durch eine auf der durch die Linsengruppe längsverschiebbaren Blendenhülse angeordnete, im Winkel zur Objektivachse verlaufende Nut gebildet, in der ein mit dem Blendenring oder dem Objektivgehäuse verbundener Führungsstift geführt ist. Eine derartige alternative Ausführung der Umsetzvorrichtung ist ebenso praktikabel und zielführend wie die vorhergehend beschriebenen Umsetzvorrichtungen.

Diese extrem einfache Ausführungsform der Umsetzvorrichtung ist nicht bei allen Objektiven anwendbar. Ojektive neuerer Bauart arbeiten mit "Floating-Elementen". Sie besitzen mehrere Linsengruppen, die bei der Entfernungseinstellung verschieden stark verschoben werden, wobei eine Linsengruppe auch ortsfest sein kann. Manchmal ist die Blende mit dieser feststehenden Linsengruppe verbunden, so daß von der mit ihr gekoppelten Blendenhülse keine Korrekturbewegung abgeleitet werden kann.

In diesem Falle ist es vorteilhaft, die Korrektur von einer anderen Linsengruppe zu steuern, wobei in den meisten Fällen die erste, dem Objekt zugewandte Linsengruppe am geeignetsten ist.

Bei Objektiven dieser Art können in Weiterbildung der Erfindung als Umsetzvorrichtung innerhalb des Objektivgehäuses zwei koaxial verlaufende und ineinander gesteckte, jeweils einen Längsschlitz aufweisende Hülsen vorgesehen sein, von denen eine Hülse mit dem mit der Blendeneinrichtung gekoppeln Blendenantriebsstift verbunden ist, und daß ein durch beide einen Winkel miteinander einschließenden Längsschlitze hindurchgeführter Führungsstift mit einer längsverstellaren Linsengruppe verbunden ist.

Durch diese spezielle Ausbildung ist in vorteilhafter Weise mit der Entfernungseinstellung automatisch und stufenlos die entsprechende Blendenverstellung durchführbar, so daß eine falsche Blendeneinstellung zuverlässig ausgeschlossen ist. Der mit der Linsengruppe verbundene und in beiden Längsschlitzen geführte Führungsstift verursacht eine Drehung der Hülse, die den zur Objektivachse geneigten Längsschlitz aufweist und mit dem Blendenantrieb verbunden ist. Dabei ist die Neigung deises schrägen Längsschlitzes derart ausgebildet, daß bei einer Längsverschiebung der Linsengruppe um ein bestimmtes Längenmaß automatisch der Blendenantrieb für dieser Längenmaßänderung entsprechende Blendenstufen betätigt wird.

Die durch den schrägen Längsschlitz definierte Verschiebebahn muß jedoch nicht unbedingt eine einer linearen Blendenverstellung entsprechende Gerade sein. Bei einem nicht linearen Verhältnis zwischen Entfernungseinstellung und Blendeneinstellung, insbesondere bei Objektiven mit zueinander relativ verschiebbaren Linsengruppen, kann der Längsschlitz auch als entsprechende Kurve ausgebildet sein.

Entsprechend einer bevorzugten Ausführungsform der Erfindung ist die radial äußere Hülse mit dem Blendenring verbunden und die radial innere, mit dem Blendenantriebsstift verbundene Hülse drehbar in der äußeren Hülse gelagert, wobei der Führungsstift um die Objektivachse drehbar auf der Linsengruppe gelagert ist.

Durch eine derartige Ausbildung ist zur Blendengrundeinstellung für die gewählte Belichtung nach wie vor der Blendenring händisch verstellbar. Dabei wird die Drehbewegung vom Blendenring auf die äußere Hülse und von dieser über den Führungsstift zur inneren Hülse und von dieser schließlich auf den Blendenan-trieb übertragen. Da der Führungsstift drehbar gelagert ist, kann diese Drehbewegung völlig unabhängig von der jeweiligen Längsposition des Führungsstiftes bzw. der Linsengruppe durchgeführt werden.

Gemäß einer weiteren vorteilhaften Ausführungsvariante der Erfindung ist hierbei vorgesehen, daß der in der radial äußeren Hülse angeordnete Längsschlitz parallel zur Objektivachse verlaufend angeordnet ist, während der in der inneren Hülse befindliche Längsschlitz im Winkel zur Objektivachse verlaufend ausgebildet ist. Mit dieser divergierenden Anordnung der beiden Längsschlitze ist die Längsbewegung der Linsengruppe zur Entfernungseinstellung in eine entsprechende Drehbewegung der Hülse für die Betätigung des Blendenantriebs umsetzbar.

Einer weiteren vorteilhaften Ausführungsform der Erfindung entsprechend ist vorgesehen, daß der größte tangentiale Abstand der beiden Längsschlitze zueinander dem größtmöglichen Verstellweg des Blendenantriebsstiftes entsprechend ausgebildet ist, wobei die Länge der Führungsschlitze dem größtmöglichen Längsverschiebeweg der Linsengruppe ent spricht. Durch eine derartige Ausbildung der Längsschlitze ist die automatische Umsetzung der Längsbewegung der Linsengruppe in eine Drehbewegung über den gesamten Bereich für die Entfernungseinstellung sichergestellt.

Gemäß einer anderen bevorzugten Variante der Erfindung ist vorgesehen, daß zwischen Stirnseite der radial äußeren Hülse und dem Objektivgehäuse eine Wellenfeder bzw. hochviskoses Fett vorgesehen ist. Durch diese konstruktive Ausführung ist die Drehbarkeit der äußeren Hülse erschwert bzw. jede der inneren Hülse erleichtert. Auf diese Weise ist gewährleistet, daß der in beiden Längsschlitzen geführte Führungsstift bei seiner Längsverschiebung mit seiner Reaktionskraft die innere Hülse seitlich verdrängt, bzw. in Drehung versetzt, während die Reaktionskraft hierfür durch die Wellenfeder bzw. das hochviskose Fett unter Vermeidung einer Drehbewegung der äußeren Hülse abgefangen wird.

Schließlich besteht noch eine weitere Ausbildung der Erfindung darin, daß die beiden Längsschlitze und der Führungsstift symmetrisch in Bezug auf eine Längssymmetrieebene des Objektives angeordnet sind. Mit dieser doppelten Anordnung von Führungsschlitzen und Führungsstift wird eine gleichmäßige Übertragung der Kräfte und damit eine präzise Blendenverstellung erzielt.

Im folgenden wird die Erfindung anhand in der Zeichnung dargestellter Ausführungsbeispiele näher beschrieben. Es zeigen:

Figur 1 Einen Querschnitt eines erfindungsgemäß ausgebildeten Makroobjektivs entlang der Objektivachse,

Figur 2 eine Draufsicht auf das Makroobjektiv gemäß Fig. 1

Figur 3 ein weiteres Ausführungsbeispiel in einem Teilquerschnitt,

Figur 4 einen Längsquerschnitt durch ein weiteres erfindungsgemäß ausgebildetes Makroobjektiv,

Figur 5 ebenfalls im Längsschnitt das Makroobjektiv gemäß Fig. 4 mit einer abweichenden Stellung der längsverschiebbaren Linsengruppe,

Figur 6 und 7 jeweils eine Draufsicht auf das Makroobjektiv gemäß Fig. 4,

Figur 8 ein weiteres erfindungsgemäßes Ausführungsbeispiel einer Umsetzvorrichtung.

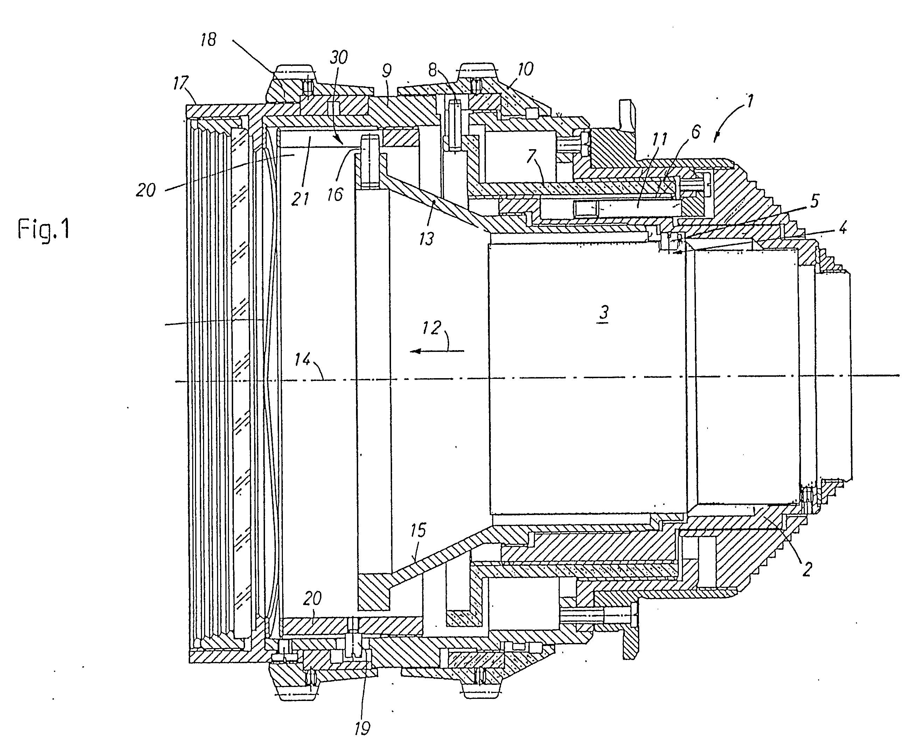

Das in Fig. 1 dargestellte Makroobjektiv 1 weist eine in einem Objektivtubus 2 gelagerte Linsengruppe 3 mit einem nicht näher dargestellten Blendenantrieb 4 und einem mit diesem verbundenen Blenden-

antriebsstift 5 auf. Der Objektivtubus 2 ist über ein Gewinde 6 mit einer Gewindehülse 7 verbunden, die ihrerseits über einen Stift 8 mit einem drehbar auf einem Objektivgehäuse 9 gelagerten Entfernungsring 10 verbunden ist. Auf diese Weise ist durch Verdrehung des Entfernungsringes 10 die Linsengruppe 3, die über Nut-Feder-Verbindungen nicht drehbar ist, von der dargestellten kameraseitigen Position gemäß dem Pfeil 12 in die objektivseitige Endposition verschiebbar.

Innerhalb des Objektivtubus 2 ist eine Blendenhülse 13 koaxial zur Objektivachse 14 drehbar gelagert. Diese Blendenhülse 13 weist objektivseitig eine konusförmige Erweiterung 15 auf, an der ein radial nach außen abstehender Führungsstift 16 befestigt ist. In ihrem kameraseitigen Endbereich ist die Blendenhülse 13 mit dem Blendenantriebsstift 5 drehfest verbunden. Im objektseitigen Endbereich 17 des Makroobjektives 1 ist ein Blendenring 18 drehbar am Objektivgehäuse 9 gelagert. Dieser Blendenring 18 ist über einen Stift 19 mit einer drehbaren, koaxial zur Objektivachse 14 angeordneten Korrekturhülse 20 verbunden. Diese weist einen im Winkel zur Objektivachse 14 verlaufend angeordneten Führungs- bzw. Längsschlitz 21 auf, in dem der Führungsstift 16 eingesteckt bzw. geführt ist. Zwischen dem objektseitigen Stirnendbereich der Korrekturhülse 21 und dem Objektivgehäuse 9 ist eine Wellenfeder 22 vorgesehen.

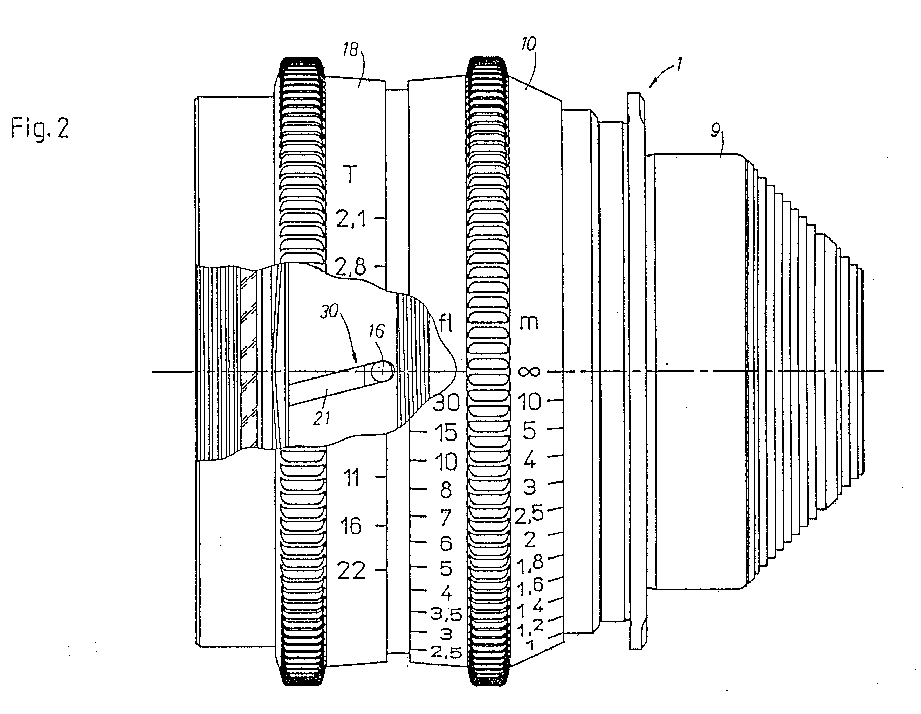

Wird nun, wie in Fig. 2 ersichtlich, der Entfernungsring 10 von unendlich in den Makrobereich verdreht, so wird diese Drehbewegung über den Stift 8 und die Gewindehülse 7 sowie das Gewinde 6 auf den Objektivtubus 2 übertragen, der mitsamt der Linsengruppe 3 und dem Blendenantrieb sowie dem Blendenantriebsstift 5 in Richtung des Pfeiles 12 zum objektseitigen Ende des Makroobjektivs 1 bewegt wird. Dabei wird ebenso die zwischen Objektivtubus 2 und der Linsengruppe 3 befindliche Blendenhülse 13 mitbewegt, deren Längsbewegung durch die aus Führungsschlitz 21 und Führungsstift 16 gebildete Umsetzvorrichtung 30 parallel in eine Drehbewegung um die Objektivachse 14 umgesetzt wird. Mit dieser Drehbewegung erfolgt auch eine Verdrehung des Blendenantriebsstiftes 5 und damit eine der jeweiligen Entfernungseinstellung bzw. Position der Linsengruppe 3 entsprechende Blendeneinstellung. Die die Drehbewegung der Blendenhülse 13 einleitende Aktionskraft bewirkt eine in Gegenrichtung auf die Korrekturhülse 21 einwirkende Reaktionskraft die an sich die Korrekturhülse 21 in Gegendrehung versetzen würde. Um eine derartige Gegendrehung zu vermeiden, ist die Korrekturhülse 21 durch die Wellenfeder 22 einer erhöhten Drehfriktion unterworfen. Bei einer Drehung des Entfernungsringes 10 in der Gegenrichtung vom Makrobereich in den Bereich unendlich erfolgt eine Längsbewegung der Lingengruppe 3 entgegen der Richtung des Pfeiles 12 zum kameraseitigen Ende des Makroobjektivs 1. Dabei erfolgt ebenso wiederum eine dieser Entfernungseinstellung entsprechende Blendeneinstellung, indem die Blendenhülse mitsamt dem Blendenantriebsstift 4 entsprechend verdreht wird.

Die Blendeneinstellung ist auch nach wie vor durch den Blendenring 18 manuell durchführbar, wobei die Drehewegung über den Stift 19 auf die Korrekturhülse 21 unter Überwindung der durch die Wellenfeder 22 bewirkten Friktion übertragen wird. Die Korrekturhülse 21 gibt die Drehbewegung über den Führungsstift 16 auf die Blendenhülse 13 weiter, mit der der Blendenantriebsstift 5 entsprechend verdreht wird.

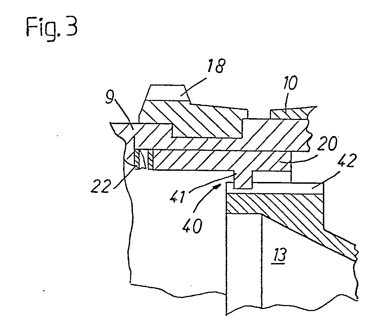

Im Ausführungsbeispiel nach Fig. 3 ist die Umsetzvorrichtung 40 durch einen mit der Korrekturhülse verbundenen Zapfen 41 und einer diesen aufnehmenden, mit der Blendenhülse 13 verbundenen Nut 42 gebildet.

Objektive neuerer Bauart arbeiten mit "Floating-Elementen". Sie besitzen mehrere Linsengruppen, die bei der Entfernungseinstellung verschieden stark verschoben werden, wobei eine Linsengruppe auch ortsfest sein kann. Manchmal ist die Blende mit dieser feststehenden Linsengruppe verbunden, so daß von der mit ihr gekoppelten Blendenhülse keine Korrekturbewegung abgeleitet werden kann.

In diesem Falle ist es vorteilhaft, die Korrektur von einer anderen Linsengruppe zu steuern, wobei in den meisten Fällen die erste, dem Objekt zugewandte Linsengruppe am geeignetsten ist.

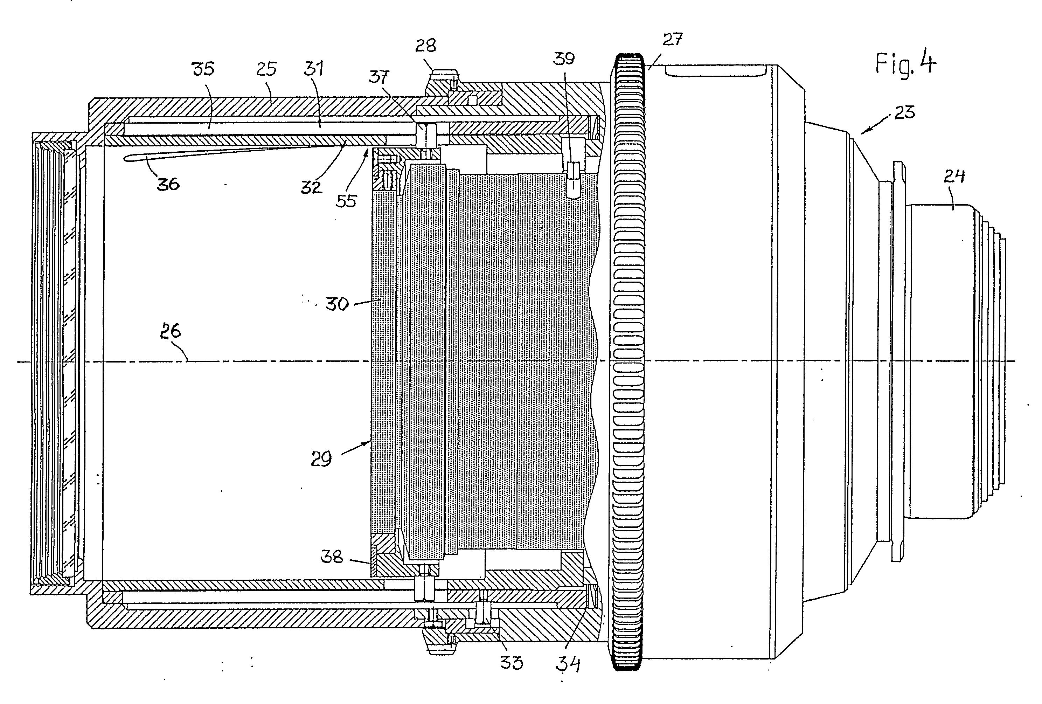

Ausführungsformen der Erfindung für solche Objektive sind nachstehend an Hand der Fig. 4 bis 8 beschrieben.

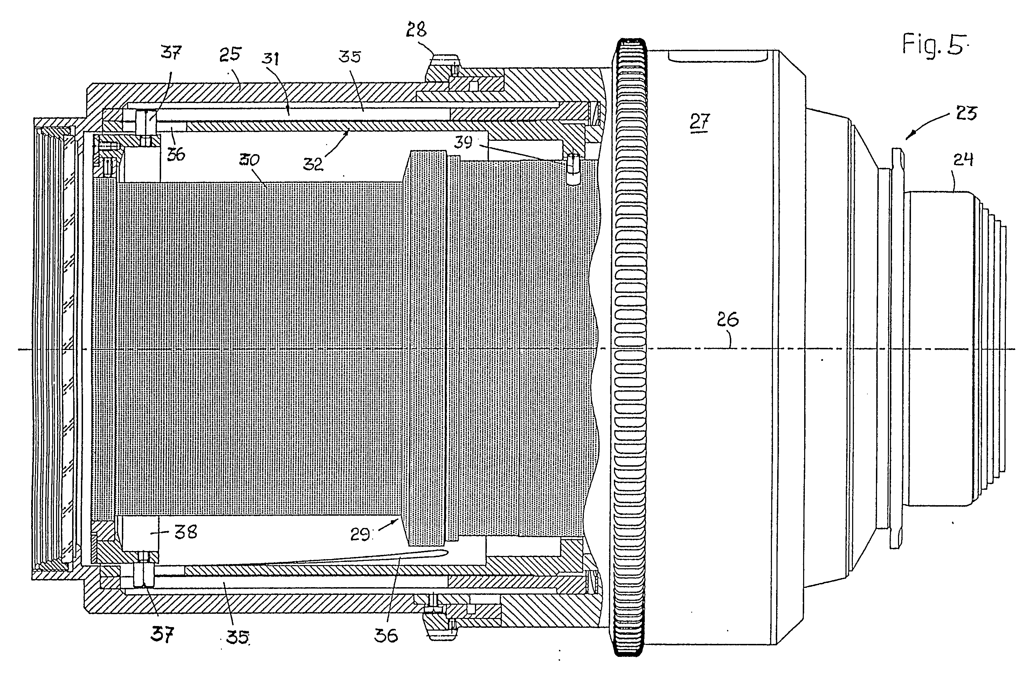

Das in den Fig. 4 und 5 dargestellte Makroobjektiv 23 setzt sich im wesentlichen aus einem an die Kameraöffnung anzuschließenden Gewindesockel bzw. Bajonettverschluß 24 und einem zylinderförmigen Gehäuse 25 mit einer Objektivachse 26 zusammen. Auf diesem sind ein Entfernungsring 27 und ein Blendenring 28 um die Objektivachse 26 drehbar gelagert. Innerhalb des Gehäuses 25 ist ein Linsensystem 29 angeordnet, das eine über den Entfernungsring 27 in Längsrichtung des Objektivs 23 verstellbare Linsengruppe 30 aufweist. Zwischen diesem und dem Gehäuse 25 sind zwei koaxial zur Objektivachse 26 angeordnete und ineinandergesteckte zylinderförmige Hülsen 31 und 32 angeordnet. Die radial äußere Hülse 31 steht über einen Stift 33 mit dem Blendenring 28 in Verbindung. An einer Stirnseite dieser Hülse 31 ist eine Wellenfeder 34 vorgesehen, die sich auf der anderen Seite am Gehäuse 25 abstützt. An diametral gegenüberliegenden Bereichen weist die radial äußere Hülse 31 jeweils einen parallel zur Objektivachse 26 verlaufenden Längsschlitz 35 auf. Die radial innere Hülse 32 weist ebenfalls in diametral gegenüberliegenden Bereichen jeweils einen Längsschlitz 36 auf, der jedoch im Winkel zum Längsschlitz 35 bzw. zur Objektivachse 26 verläuft. Die beiden Hülsen 31 und 32 bilden zusammen mit einem Mitnehmerstift 37 eine Umsetzvorrichtung 55 zur Umformung der Linsengruppenlängsbewegung in eine entsprechende Drehbewegung des Blendenantriebes. Der Mitnehmerstift 37 ist jeweils durch beide Längsschlitze 35, 36 hindurchgeführt und mit seinem radial inneren Ende auf einem drehbar auf der Linsengruppe 30 gelagerten Tragring 38 befestigt. Die radial innere Hülse 32 ist über einen Blendenantriebsstift 39 mit einem nicht näher dargestellten Blendenantrieb zur Verstellung der Blende drehverbunden.

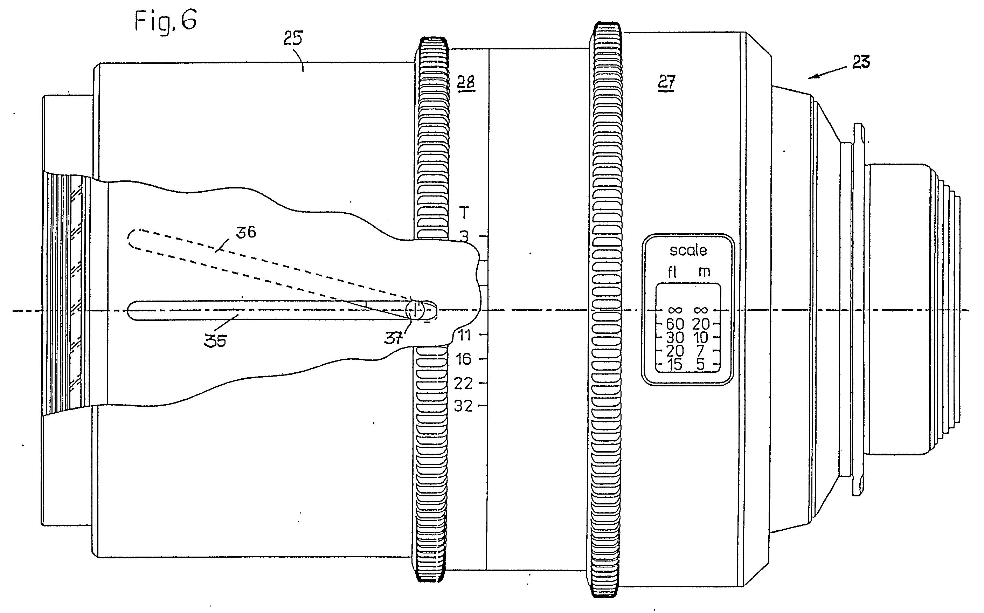

Bei der in Fig. 4 und 6 dargestellten Position ist der Entfernungsring auf unendlich eingestellt und die längsverschiebbare Objektivkapsel 30 zur Gänze in die feststehende Linsengruppe eingefahren. Der Mitnehmerstift 37 befindet sich in der dem Blendenring 28 benachbarten innersten Position innerhalb der beiden Längsschlitze 35 und 36. Die Blende ist auf die Entfernung unendlich eingestellt. Sobald nun der Entfernungsring 27 in Richtung zum Makrobereich verdreht wurd, erfolgt eine entprechende Längsverschiebung der Linsengruppe 30 entlang der Objek tivachse 26. Damit zwangsläufig verbunden ist auch eine Längsverschiebung der beiden über den Tragring mit der Linsengruppe 30 verbundenen Mitnehmerstifte, die entsprechend dem Grad der Längsverschiebung eine Verdrehung der radial inneren Hülse 32 bewirken. Diese Verdrehung kommt dadurch zustande, daß der Längsschlitz 36 im Winkel zum gegenüberliegenden Längsschlitz 35 der radial äußeren Hülse 31 verläuft. Die aus der die Drehung der inneren Hülse 32 bewirkenden Aktionskraft resultierende Aktionskraft wird über den Mitnehmerstift 37 auf die radial äußere Hülse 35 übertragen, die aufgrund der Wellenfeder 34 schwerer als die innere Hülse 32 drehbar ist. Entsprechend dem Verdrehungswinkel der inneren Hülse 32 wird über den Blendenantriebsstift 39 der Blendenantrieb verstellt, so daß automatisch und stufenlos jeder Entfernungseinstellung durch den Entfernungsring 27 eine entsprechende korrekte Blendeneinstellung gegenübersteht. Unabhängig von dieser automatischen Einstellung des Blendenwertes kann die Blende jederzeit auch manuell über den Blendenring 28 eingestellt werden, indem dieser auf bekannte Art und Weise verdreht wird. Dabei erfolgt über den Stift 33 eine Verdrehung der radial äußeren Hülse, die die Drehbewegung über die beiden Mitnehmerstifte 37 auf die radial innere Hülse überträgt, von der wiederum die Drehbewegung über den Blendenantriebsstift 39 auf den Blendenantrieb weitergegeben wird.

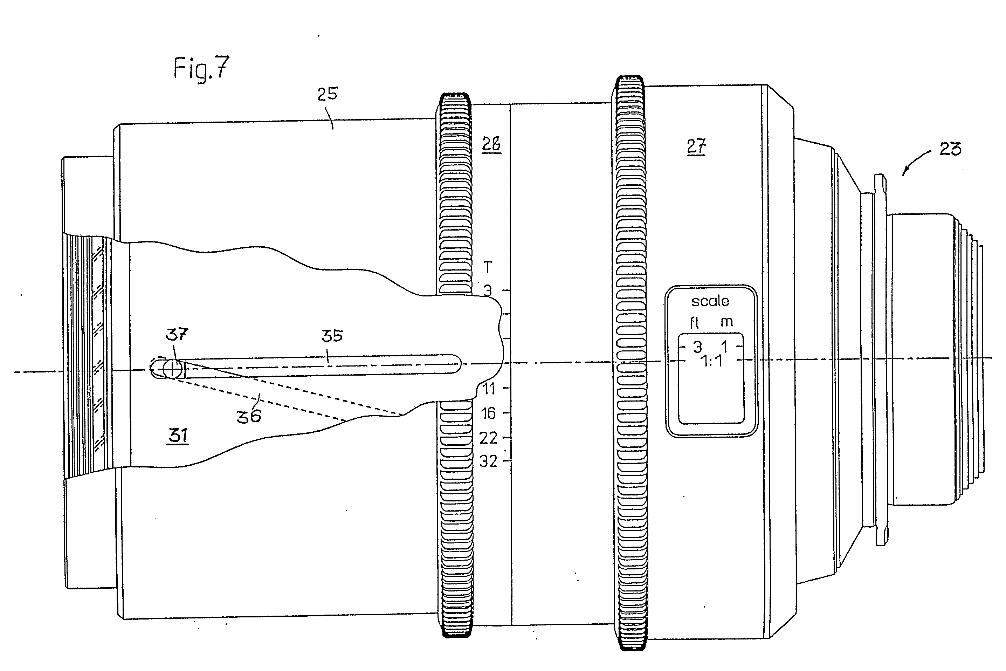

Die Fig. 5 und 7 zeigen die vorderste Endstellung der Linsengruppe 30, bei der der größte Makrobereich und die größtmögliche Blendeneinstellung erreicht ist. Bei der Rückbewegung der Linsengruppe 30 durch Verstellung des Entfernungsringes 27 in Richtung unendlich erfolgt ebenso eine automatische und stufenlose Blendeneinstellung über die beiden Längsschlitze 35, 36 und den Mitnehmerstift 37. Der durch beide Längsschlitze 35, 36 eingeschlossene Winkel entspricht der erforderlichen Umsetzung der Längsverschiebung der Linsengruppe 30 in eine entsprechende Drehbewegung des Blendenantriebsstiftes 39 für einen der entsprechenden Entfernungseinstellung geeigneten Blendeneinstellwert. D. h., daß die Neigung des schräg verlaufenden Längsschlitzes 36 derart sein muß, daß bei einer Verschiebung der Linsengruppe 30 um ein bestimmtes Längenmaß der Blendenantrieb um dieser Längsverstellung entsprechenden Blendenstufen verstellt wird. Dabei muß es sich um keine lineare Gesetzmäßigkeit handeln, also die durch den schrägen Längsschlitz 36 definierte Verschiebebahn für den Mitnehmerstift 37 keine Gerade sein. Insbesondere bei Objektiven mit zueinander relativ verschiebbaren Linsengruppen herrscht Nichtlinearität, so daß für eine auf die Längsbewegung entsprechende Entfernungseinstellung abgestimmte Blendeneinstellung der Längsschlitz 36 entsprechend einer Kurve ausgebildet sein muß.

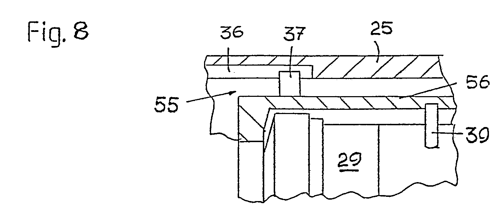

Eine in Fig. 8 dargestellte Umsetzvorrichtung 55 wird durch den an der Gehäuseinnenseite vorgesehenen Längsschlitz 36 gebildet, in dem der Mitnehmerstift 37 geführt ist. Dieser ist mit einer drehbar auf dem Linsensystem 29 gelagerten und mit dem Blendenantriebsstift 39 verbundenen Hülse 56 verbunden.

## Patentansprüche

1. Makroobjektiv mit einem am Objektivgehäuse drehbar gelagerten Entfernungsring und einer durch diesen entlang der Objektivachse längsverschiebbaren Linsengruppe und einem Blendenantrieb,
**dadurch gekennzeichnet,**
daß der Blendenantrieb (4) über einen Blendenantriebsstift (5) mit einer Umsetzeinrichtung (30) zur Umsetzung der Längsbewegung der Linsengruppe (3, 3′) in eine Drehbewegung des Blendenantriebsstiftes (5) verbunden ist.

2. Makroobjektiv nach Anspruch 1, **dadurch gekennzeichnet,** daß die Umsetzeinrichtung (30) einen in einem Winkel zur Objektivachse (14) verlaufenden Führungsschlitz (21) und einen in diesen eingreifenden Stift zur Umsetzung der Längsbewegung der Linsengruppe (3) in eine Drehbewegung des Blendenantriebsstiftes (5) aufweist.

3. Makroobjektiv nach Anspruch 1 oder 2, **dadurch gekennzeichnet,** daß die Umsetzvorrichtung (30) durch eine drehbar zwischen der Linsengruppe und einem Objektivtubus (2) gelagerte und mit dem Blendenantriebsstift (5) verbundene Blendenhülse (13) gebildet ist, die in ihrem dem Blendenantriebsstift (4) gegenüberliegen den Endbereich einen Führungsstift (16) aufweist, der in einem drehfest an der Gehäuseinnenseite angeordneten Führungsschlitz (21) eingesteckt ist.

4. Makroobjektiv mit einem drehbar gelagerten und mit einem Blendenantrieb gekoppelten Blendenring nach einem der vorangehenden Ansprüche, **dadurch gekennzeichnet,** daß der Blendenring (18) mit einer koaxial zur Objektivachse (14) drehbar gelagerten Blendenhülse (20) drehverbunden ist, die den im Winkel zur Objektivachse (14) verlaufenden Führungsbzw. Längsschlitz (21) aufweist.

5. Makroobjektiv nach einem der vorangehenden Ansprüche, **dadurch gekennzeichnet,** daß die Blendenhülse (13) in radialer Richtung koaxial innerhalb der Korrekturhülse (20) angeordnet ist und in deren Bereich eine konusförmige Erweiterung (15) aufweist.

6. Makroobjektiv nach einem der vorangehenden Ansprüche, **dadurch gekennzeichnet,** daß im stirnseitigen Endbereich der Korrekturhülse (20) und dem Objektivgehäuse (9) eine Wellenfeder (22) angeordnet ist.

7. Makroobjektiv nach einem der vorangehenden Ansprüche, **dadurch gekennzeichnet,** daß die Umsetzvorrichtung (40) durch eine auf der durch die Linsen gruppe längsverschiebbaren Blendenhülse (13) angeordnete, im Winkel zur Objektivachse (14) verlaufende Nut (42) gebildet ist, in der ein mit dem Blendenring (20) oder dem Objektivgehäuse (9) verbundener Führungsstift bzw. Zapfen (41) geführt ist.

8. Makroobjektiv nach Anspruch 1, **dadurch gekennzeichnet,** daß als Umsetzvorrichtung (55) innerhalb des Objektivgehäuses (25) zwei koaxial verlaufende und ineinander gesteckte, jeweils einen Längsschlitz (35, 36) aufweisende Hülsen (31, 32) vorgesehen sind, von denen eine Hülse mit dem mit der Blendeneinrichtung gekoppelten Blendenantriebsstift (39) verbunden ist, und daß ein durch beide einen Winkel miteinander einschließenden Längsschlitze (35, 36) hindurchgeführter Führungsstift (37) mit einer längsverstellbaren Linsengeruppe (30) verbunden ist.

9. Makroobjektiv nach Anspruch 8, **dadurch gekennzeichnet,** daß die radial äußere Hülse (31) mit dem Blendenring (28) drehverbunden und die radial innere, mit dem Blendenantriebsstift (37) verbundene Hülse (32) drehbar in der äußeren Hülse (31) gelagert ist, und daß der Führungsstift (37) um die Objektivachse (26) drehbar auf der Linsengruppe (30) gelagert ist.

10. Makroobjektiv nach Anspruch 8 oder 9, **dadurch gekennzeichnet,** daß der in der radial äuße ren Hülse (31) angeordnete Längsschlitz (35) parallel zur Objektivachse (26) verlaufend angeordnet ist, während der in der inneren Hülse (32) befindliche Längsschlitz (36) im Winkel zur Objektivachse (26) verlaufend ausgebildet ist.

11. Makroobjektiv nach einem der Ansprüche 8 bis 10, **dadurch gekennzeichnet,** daß der größte tangentiale Abstand der beiden Längsschlitze (35, 36) zueinander dem größtmöglichen Verstellweg des Blendenantriebsstiftes (39) entsprechend ausgebildet ist, wobei die Länge der Längsschlitze (35, 36) dem größtmöglichen Längsverschiebeweg der Objektivkapsel (30) entspricht.

12. Makroobjektiv nach einem der Ansprüche 8 bis 11, **dadurch gekennzeichnet,** daß zwischen der Stirnseite der radial äußeren Hülse (31) und dem Objektivgehäuse (25) eine Wellenfeder (34) bzw. hochviskoses Fett vorgesehen ist.

13. Makroobjektiv nach einem der Ansprüche 8 bis 12, **dadurch gekennzeichnet,** daß die beiden Längsschlitze (35, 36) und der Führungsstift (37) symmetrisch in Bezug auf eine Längssymmetrieebene des Objektivs angeordnet sind.

Fig.1

EP 0 333 637 A2

Fig. 2

T
2,1
2,8

30
16
21

ft
30
15
10
8
7
6
5
4
3,5
3
2,5

m
∞
10
5
4
3
2,5
2
1,8
1,6
1,4
1,2
1

11
16
22

18
10
1
9

EP 0 333 637 A2

Fig. 3

Fig.4

EP 0 333 637 A2

Fig.5

Fig.6

Fig.7

EP 0 333 637 A2

Fig. 8